(19)

Europäisches
Patentamt
European
Patent Office
Office européen
des brevets

(11) EP 2 322 842 A1

(12) EUROPEAN PATENT APPLICATION

(43) Date of publication:
18.05.2011 Bulletin 2011/20

(51) Int Cl.:
F17D 5/02 (2006.01)        B60S 3/04 (2006.01)

(21) Application number: 10014003.7

(22) Date of filing: 27.10.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.11.2009 IT TO20090882

(71) Applicant: Sesia Carlo
15046 San Salvatore Monferrato (AL) (IT)

(72) Inventor: Sesia Carlo
15046 San Salvatore Monferrato (AL) (IT)

(74) Representative: Garavelli, Paolo
A.BRE.MAR. S.R.L.
Via Servais 27
10146 Torino (IT)

(54) **Car-washing plant equipped with a control system of the consumption of water and/or energy and/or chemical washing products, and related control processes**

(57)     A car-washing plant is described, adapted to perform a plurality of washing activities ($A_i$) each one implying a consumption of water and/or electric energy and/or at least one chemical washing product, each of said activities ($A_i$) being associated with a related expected standard value of predefined water consumption ($Q_{Si}$) and/or predefined energy consumption ($Q_{Ei}$) and/or predefined consumption ($Q_{Pji}$) of a j-th chemical washing product, and comprising at least one control system of the consumption of water and/or electric energy and/or chemical washing products.

FIG. 1

EP 2 322 842 A1

**Description**

The present invention refers to a car-washing plant equipped with a control system of the consumption of water and/or energy and/or chemical washing products, and to the related control processes.

It is known that, nowadays, the scarceness of water resources, and the parallel continuous increase of water consumptions, above all at industrialised countries level, is an extremely relevant problem globally.

From performed statistics, it results, in particular, that car-washing plants are, among common users of water consumption, one of the activities that mostly affect water consumptions.

In order to solve such problem, the art in time has proposed various solutions to be applied to car-washing plants to reduce the impact on water consumptions deriving from their operation. In particular, the art proposes car-washing plants equipped with recovering and re-circulating systems that allow re-using up to 80% of the used washing water.

The art has further proposed car-washing plants equipped with tanks for recovering rain water from water networks in such a way as to further reduce the amount of water taken from the network and used as washing water.

What is not proposed by the art is a system that allows constantly controlling and verifying the operation of such plants at water consumption level: not rarely, in fact, some plants, due to operating anomalies or leakages in water plants, consume more water than it would be necessary. Sometimes such situation, without suitable controls, is prolonged in time causing a great and useless waste of water.

It is as well known that the continuous growth of the demand of energy by modern society, and mainly by the most advanced industrial societies, the more and more limited availability of fossil fuels for supplying the traditional thermo-electrical plans and the increased sensitivity of the population towards the problem of emitting carbon dioxide and other gases in the atmosphere whose effects are negative towards the climate, have lead to the research and use of new energy sources with the progressive abandonment of energy sources of the traditional type in favour or renewable sources, namely not depending from sources that require very long times to be regenerated and are then deemed apt to finish. Renewable energy sources, in addition to renewing their availability in extremely short times, produce, following their use, a wholly neglectable environmental pollution.

In order to solve such problem, one of the solutions to be adopted can be to take care of adequately and constantly monitoring the operation of devices and plants with electric consumption in such a way as to regularly verify that consumptions of such systems are always optimum, therefore in line with foreseen consumptions, in such a way as to prevent possible wastes of energy caused by possible malfunctions or inadequate uses of these systems. What the art however does not propose is a car-washing plant equipped with a system and/or a process for controlling the energy consumption.

Similarly, the same environment status in terms of pollution more and more becomes a crucial problem. It is therefore known that the car-washing plants, having to demand their operation to the use of a great number of chemical washing products, such as soaps, detergents, waxes, etc., has a not neglected role in such context. Also in this case, to decrease the environmental impact of such plants, it can be suitable to take care of adequately and regularly monitoring the consumption of chemical washing products during the washing operations in such a way as to constantly verifying that there are no wastes or excessive and useless consumptions of such products. What however the art does not propose is a car-washing plant equipped with a system and/or a process for controlling the consumption of the chemical washing products.

Therefore, object of the present invention is solving the above prior art problems by providing a car-washing plant equipped with a system and/or a process for controlling the consumption of water and/or energy allows timely signaling an anomalous consumption of water and/or electric energy.

Another object of the present invention is providing a car-washing plant equipped with a system and/or process for controlling the consumption of chemical washing products that allow timely signaling an anomalous consumption of such chemical products.

The above and other objects and advantages of the invention, as will appear from the following description, are obtained by a system for controlling the consumption of water and/or energy and/or chemical washing products as claimed in claim 1.

Moreover, the above and other objects and advantages of the invention, as will appear from the following description, are obtained by a process for controlling the consumption of water and/or energy and/or chemical washing products as claimed in the respective claims.

Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described without departing from the scope of the invention as appears from the enclosed claims.

The present invention will be better described by some preferred embodiments thereof, provided as a non-limiting example, with reference to the enclosed drawings, in which:

- Figure 1 is a block diagram showing a preferred embodiments of the control system according to the present invention; and
- Figure 2 is a block diagram showing some steps of the control process according to the present invention.

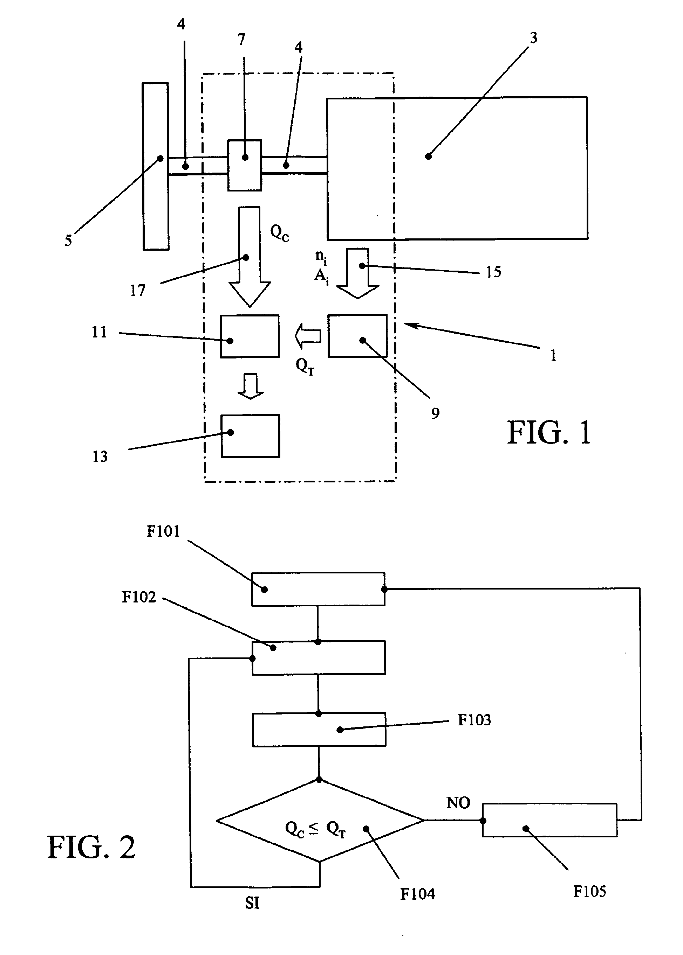

With reference to Figure 1, it is possible to note at least one user of water consumption 3 that is able to perform a plurality of activities $A_i$ that imply a water consumption, each one of such activities $A_i$ being associated with a related expected standard value $Q_{Si}$ of predefined water consumption, such user of water consumption 3 being connected to at least one branch 4 of water supplying network 5 adapted to supply water to such user 3, the control system 1 according to the present invention comprising at least detecting means of the water consumption 7 interposed between the user of water consumption 3 and the water supplying network 5 along such branch 4, such detecting means of the water consumption 7 being adapted to detect at least one consumption value $Q_c$ (expressed for example in litres) of water in a certain time interval At (for example At has the assigned value of 1 day) of such user 3, such system 1 further comprising processing means 9 of such standard values $Q_{Si}$ of water consumption of such activities $A_i$ and comparing means 11 between such consumption value $Q_c$ and such standard values $Q_{Si}$ of water consumption in such time interval $\Delta t$.

In particular, the user 3, by means of suitable first transmitting means 17 known in the art, takes care of transmitting to the processing means 9 at least one list of activities $A_i$ performed during the time interval At: the processing means 9 then take care of computing an aggregated value of predefined and expected water consumption, defined for example as:

$$Q_T = \sum_{i=1}^{m} n_i \cdot Q_{Si}$$

where:

- $Q_{Si}$ is the expected standard value of predefined water consumption of activity $A_i$;
- $n_i$ is the number of repetitions of activity $A_i$ during At;
- m is the number of different activities $A_i$ of water consumption that can be performed by the user 3; and
- $Q_T$ is the optimum aggregate value of water consumption that should be obtained if each one of the activities $A_i$ performed by the user 3 in the time interval $\Delta t$ actually consumes the predefined and programmed amount of water $Q_{Si}$.

Once having computed the aggregated value $Q_T$, this is transmitted to the comparing means 11.

By means of suitable second transmitting means 17 known in the art, upon expiry of the time interval $\Delta t$, the detecting means of the water consumption 7 take care of transmitting the water consumption value $Q_c$ detected in such time interval At to the comparing means 11.

The comparing means 11 then take care of comparing the value $Q_c$ of water actually consumed by user 3 during the time interval At with the aggregated value $Q_T$ that is the amount of water that the user 3 should have consumed if operating as expected: the comparing means can then detect three different situations:

- if $Q_c < Q_T$, the user 3 consumes a lower amount of water than expected and therefore operates optimally;
- if $Q_C = Q_T$, the user 3 consumes the same amount of water as expected and therefore operates as foreseen;
- if instead $Q_C > Q_T$, the user 3 consumes a greater amount of water than expected and therefore operates anomalously.

The system 1 according to the present invention can further comprise signalling means 13 that, at least when there is the above situation of anomalous consumption detected by the comparing means 11, can take care of emitting and/or sending an alert signal or message: moreover, for example, the comparing means 11 can compute, and possibly signal through the signalling means 13, the amount of consumption difference $\Delta Q = Q_C - Q_T$ in such a way as to allow understanding the amount of the detected anomaly. Obviously, the signalling means 13 can also take care of make available, for example, the detected and computed values $Q_c$ and $Q_T$ for every At even in case of optimum or expected operation of the user 3 to allow accurately monitoring the whole operating life of the user 3 from the point of view of its own water consumption.

The present invention further deals with at least one car-washing plant, of a type substantially known in the art, equipped with at least one of the following systems:

- at least one control system of the consumption of water, as described above
- at least one control system of the consumption of electric energy, described below;
- at least one control system of the consumption of chemical washing products, such as soaps, detergents, waxes, etc, as described below.

In particular, the car-washing plant according to the present invention is able to perform a plurality of classical and known washing activities $A_i$ that imply a consumption of electric energy and/or chemical washing products, each one of such activities $A_i$ being associated with a related expected standard value of predefined energy consumption $Q_{Ei}$ and/or a predefined consumption $Q_{Pji}$ of a certain j-th chemical washing product, such car-washing plant being connected to at least one branch of electric energy supplying network suitable to supply electric energy for operating such plant according to the present invention. In particular, the activities $A_i$ that imply a consumption of water and/or electric energy and/or a consumption of chemical washing products are represented by the single washing programs that mark the operation of the washing plant and the related expected standard values $Q_{Ei}$ e $Q_{Pji}$ are respectively the consumption values of water and/or electric energy and/or every j-th chemical washing product that the manufacturer assigns to each one of such single programs.

The control system of the consumption of electric energy of the plant according to the present invention comprises at least means for detecting the consumption of electric energy interposed between the car-washing plant and the supplying network of electric energy along such branch, said means for detecting the consumption of electric energy being adapted to detect at least one consumption value $Q_E$ (expressed for example in Kwh) of electric energy in a certain time interval At (for example $\Delta t$ has the assigned value of 1 day) of such car-washing plant, such control system further comprising processing means of such standard values $Q_{Ei}$ of consumption of electric energy of such activities $A_i$ and comparing means between such consumption value $Q_E$ and such standard values $Q_{Ei}$ of energy consumption in such time interval At. The above processing means and comparing means could be the same means applied both to water and to electric energy, or could be different means.

In particular, the car-washing plant, by means of suitable first transmitting means (that could be the same or different from the above first transmitting means for water) known in the art, takes care of transmitting to the processing means at least one list of activities $A_i$ performed during the time interval $\Delta t$: the processing means then take care of computing an aggregated, predefined and expected consumption value of electric energy, defined for example as:

$$Q_{TE} = \sum_{i=1}^{m} n_i \cdot Q_{Ei}$$

where:

-    $Q_{Ei}$ is the expected standard predefined consumption value of electric energy of the activity $A_i$;
-    $n_i$ is the number of repetitions of the activity $A_i$ during $\Delta t$;
-    m is the number of different activities $A_i$ of consumption of electric energy that can be performed by the car-washing plant; and
-    $Q_{TE}$ is the optimum aggregated value obtained if each one of the activities $A_i$ performed in the time interval $\Delta t$ actually consumed the predefined and programmed amount of electric energy $Q_{Ei}$.

Once having computed the aggregated value

$Q_{TE}$, it is transmitted to the comparing means.

By means of suitable second transmitting means (that could be the same or different from the above second transmitting means for water) known in the art, upon expiry of the time interval At, the means for detecting the consumption of electric energy take care of transmitting the consumption value $Q_{CE}$ of electric energy detected in such time interval $\Delta t$ to the comparing means.

The comparing means take then care of comparing the value $Q_E$ of electric energy actually consumed by the car-washing plant during the time interval At with the aggregated value $Q_{TE}$ that represents the amount of electric energy that the car-washing plant should have consumed by operating as expected: the comparing means can then detect three different situations:

-    if $Q_E < Q_{TE}$, the car-washing plant consumes an amount of electric energy lower than the expected one and therefore operates optimally;
-    if $Q_E = R_{TE}$, the car-washing plant consumes an amount of electric energy equal to the expected one and therefore operates as foreseen;
-    if instead $Q_E > Q_{TE}$, the car-washing plant consumes an amount of electric energy greater than expected and therefore operates anomalously.

The car-washing plant according to the present invention can further comprise signalling means that, at least when there is the above situation of anomalous consumption detected by the comparing means, can take care of emitting and/or sending an alert signal or message: moreover, for example, the comparing means can compute, and possibly signal through the signaling means, the amount of the difference of consumptions $\Delta QE = Q_E - Q_{TE}$ in such a way as to allow to understand the amount of the detected anomaly. Obviously, the signaling means can also take care of make available, for example, the values $Q_E$ and $Q_{TE}$ detected and computed for every At also in case of an optimum or expected operation of the car-washing plant to allow accurately monitoring the whole operating life of the car-washing plant from the point of view of its own energy consumption.

The control system of the consumption of chemical washing products of the plant according to the present invention comprises at least means for detecting the consumption of chemical washing products inserted, for example, inside the related tanks of such plant suitable to contain such products: each one of such means, made in a substantially known way, such as, for example, a float-type detector of a flow meter, is adapted to detect at least one consumption value $Q_{Pj}$ (expressed for example in L) of a certain and related j-th chemical washing product in a certain time interval At (for example At has the assigned value of 1 day) of such car-washing plant, such control system further comprising processing means of such standard values $Q_{Pji}$ of consumption of chemical washing products of such activities $A_i$ and comparing means between such consumption value $Q_{Pj}$ and such standard values $Q_{Pji}$ of consumption for every j-th chemical washing product considered in such time interval $\Delta t$. The above processing means and comparing means could be the same means applied both to water and to electric energy, or could be different means

Also in this case, the car-washing plant, by means of the above first transmitting means known in the art, takes care of transmitting to the processing means the list of activities $A_i$ performed during the time interval At: the processing means then take care of computing, for every used j-th chemical product, an aggregated, predefined and expected consumption value of such j-th chemical product, defined for example as:

$$Q_{TPj} = \sum_{i=1}^{s} n_i \cdot Q_{Pij}$$

where:

- $Q_{Pij}$ is the expected predefined standard consumption value of the j-th chemical washing product of the activity $A_i$;
- $n_i$ is the number of repetitions of the activity $A_i$ during At;
- s is the number of different activities $A_i$ of consumption of the j-th chemical washing product that can be performed by the car-washing plant; and
- $Q_{TPj}$ is the optimum aggregated value of consumption of the j-th chemical washing product that should be obtained if each one of the activities $A_i$ performed in the time interval At actually consumed the predefined and programmed amount of such chemical product $Q_{Pij}$.

Once having computed the aggregated value $Q_{TPj}$ for every j-th chemical washing product, this is transmitted to the comparing means.

By means of the above second transmitting means known in the art, upon expiry of the time interval At, the means for detecting the consumption of chemical washing products take care of transmitting the related consumption value $Q_{Pj}$ of every j-th chemical washing product detected in such time interval $\Delta t$ to the comparing means.

The comparing means then take care of comparing the amount $Q_{Pj}$ of every chemical washing product actually consumed by the car-washing plant during the time interval $\Delta t$ with the related aggregated value $Q_{TPj}$ that is the amount of such j-th chemical product that the car-washing plant should have consumed by operating as expected: for every j-th chemical washing product, the comparing means can then detect three different situations:

- if $Q_{Pj} < Q_{TPj}$, the car-washing plant consumes an amount of j-th chemical product lower than the expected one and therefore operates optimally;
- if $Q_{Pj} = Q_{TPj}$, the car-washing plant consumes an amount of j-th chemical product equal tot h expected one and therefore operates as foreseen;
- if instead $Q_{Pj} > Q_{TPj}$, the car-washing plant consumes an amount of j-th chemical product greater than expected and therefore operates anomalously.

Then, through the above signalling means, when there is the above situation of anomalous consumption detected by the comparing means, the car-washing plant according to the present invention can take care of emitting and/or sending an alert signal or message: moreover, for example, the comparing means can compute, and possibly signal through the signaling means, the amount of consumption difference $\Delta QPj = Q_{Pj} - Q_{TPj}$ in such a way as to allow understanding the amount of detected anomaly in the consumption of the certain j-th chemical product. Obviously, the signalling means can also take care of make available, for example, the values $Q_{Pj}$ and $Q_{TPj}$ detected and computed for every At also in case of optimum or expected operation of the car-washing plant to allow accurately monitoring the whole operating life of the car-washing plant from the point of view of the consumption of all used j-th chemical washing products.

The present invention further deals with a control process of the water consumption of at least one user 3 supplied by the water supplying network 5, for example through a system 1 according to the present invention. In particular, with reference to Figure 2, it is possible to note that the process according to the present invention comprises the steps of:

a) providing F101 standard values $Q_{Si}$ of water consumption related to activities $A_i$ of water consumption that can be performed by such user 3;
b) detecting F102, for example through the detecting means of water consumption 7 interposed between the user of water consumption 3 and the water supplying network 5 of the system 1, at least one water consumption value $Q_c$ of the user 3 in a certain time interval At;
c) computing F103 the aggregated value of predefined and expected water consumption, defined for example as:

$$Q_T = \sum_{i=1}^{m} n_i \cdot Q_{Si}$$

where:

- $Q_{Si}$ is the expected standard value of predefined water consumption of activity $A_i$;

- $n_i$ is the number of repetitions of activity $A_i$ during $\Delta t$;
- m is the number of different activities $A_i$ of water consumption that can be performed by the user 3; and
- $Q_T$ is the optimum aggregate value of water consumption that should be obtained if each one of the activities $A_i$ performed by the user 3 in the time interval $\Delta t$ actually consumes the predefined and programmed amount of water $Q_{Si}$;

d) preferably upon expiry of the time interval $\Delta t$, comparing F104 the value $Q_c$ of water actually consumed by the user 3 during the time interval $\Delta t$ with the aggregated value $Q_T$ that is the amount of water that the user 3 should have consumed by operating as expected;

e) if $Q_c > Q_T$ sending F105 an alert signal of anomalous operation of the user 3 and possibly computing and signalling the amount of the consumption difference $\Delta Q = Q_C - Q_T$; and

repeating steps b) to e) for a new, following time interval $\Delta t$.

The present invention further deals with a process for controlling the energy consumption of at least one car-washing plant according to the present invention. In particular, the process according to the present invention comprises the steps of:

b) providing standard values $Q_{Ei}$ of consumption of electric energy related to activities $A_i$ of consumption of electric energy that can be performed by such car-washing plant;

c) detecting, for example through the means for detecting the consumption of electric energy interposed between the car-washing plant and the supplying network of electric energy of the car-washing plant, at least one consumption value $Q_E$ of electric energy of the car-washing plant in a certain time interval $\Delta t$;

d) computing the aggregated, predefined and expected consumption value of electric energy, defined for example as:

$$Q_{TE} = \sum_{i=1}^{m} n_i \cdot Q_{Ei}$$

where:

- $Q_{Ei}$ is the expected predefined standard consumption value of electric energy of the activity $A_i$;
- $n_i$ is the number of repetitions of the activity $A_i$ during $\Delta t$;

- m is the number of different activities $A_i$ of consumption of electric energy that can be performed by the car-washing plant; and
- $Q_{TE}$ is the optimum aggregated value of consumption of electric energy that should be obtained if each one of the activities $A_i$ performed in the time interval $\Delta t$ actually consumed the predefined and programmed amount of electric energy $Q_{Ei}$;

d) preferably upon expiry of the time interval $\Delta t$, comparing the value $Q_E$ of electric energy actually consumed by the car-washing plant during the time interval $\Delta t$ with the aggregated value $Q_{TE}$ that represents the amount of electric energy that the car-washing plant should have consumed when operating as expected;

e) if $Q_E > Q_{TE}$ sending an alert signal of anomalous operation of the car-washing plant and possibly computing and signalling the amount of the consumption difference $\Delta QE = Q_E - Q_{TE}$; and

f) repeating steps b) to e) for a new following time interval $\Delta t$.

The present invention further deals with a process for controlling the consumption of chemical washing products of at least one car-washing plant according to the present invention. In particular, the process according to the present invention comprises the steps of:

a) providing standard values $Q_{Pji}$ of consumption for every certain j-th chemical washing product related to activities $A_i$ of consumption of chemical washing products that can be performed by such car-washing plant;

b) detecting, for example through the means for detecting the consumption of chemical washing products, at least one consumption value $Q_{Pj}$ of a certain and related j-th chemical washing product of the car-washing plant in a certain time interval $\Delta t$;

c) computing, for every used j-th chemical product, an aggregated, predefined and expected consumption value of such j-th chemical product, defined for example as:

$$Q_{TPj} = \sum_{i=1}^{s} n_i \cdot Q_{Pij}$$

where:

- $Q_{Pij}$ is the expected predefined standard consumption value of the j-th chemical washing product of the activity $A_i$;
- $n_i$ is the number of repetitions of the activity $A_i$ during $\Delta t$;

- s is the number of different activities $A_i$ of consumption of the j-th chemical washing product that can be performed by the car-washing plant; and

- $Q_{TPj}$ is the optimum aggregated value of consumption of the j-th chemical washing product that should be obtained if each one of the activities $A_i$ performed in the time interval At actually consumed the predefined and programmed amount of such chemical product $Q_{Pij}$;

d) preferably upon expiry of the time interval At, comparing the amount $Q_{Pj}$ of the j-th chemical washing product actually consumed by the car-washing plant during the time interval $\Delta t$ with the related aggregated value $Q_{TPj}$ that represents the amount of such j-th chemical product that the car-washing plant should have consumed by operating as expected;
e) if $Q_{Pj} > Q_{TPj}$ sending an alert signal of anomalous operation of the car-washing plant and possibly computing and signalling the amount of the consumption difference $\Delta QPj = Q_{Pj} - Q_{TPj}$; and
f) repeating steps b) to e) for a new following time interval $\Delta t$.

The control system of the consumption of water and/or electric energy and/or the control system of the consumption of chemical washing products, and their related control processes according to the present invention therefore allow advantageously controlling, globally and with continuity, the actual consumptions of the whole car-washing plant, detecting and signaling, when necessary, the occurrence of anomalous situations of consumption of water and/or electric energy and/or washing products with respect to the respective programmed consumptions, and therefore allow possible maintenance operators to timely intervene, avoiding to prolong a waste situation.

**Claims**

1. Car-washing plant adapted to perform a plurality of washing activities ($A_i$) each one implying a consumption of water and/or electric energy and/or at least one chemical washing product, **characterised in that** each one of said activities ($A_i$) is associated with a related expected standard value ($Q_{Si}$) of predefined water consumption and/or a related expected standard value of predefined energy consumption ($Q_{Ei}$) and/or a predefined consumption ($Q_{Pji}$) of a j-th of said chemical washing products, and **in that** the car-washing plant comprises at least one control system of said consumption of water and/or electric energy and/or at least one control system of said consumption of said chemical washing products.

2. Control system (1) according to claim 1, **character-**

**ised in that** it comprises at least detecting means of the water consumption (7) interposed between a user of water consumption (3) and the water supplying network (5), said detecting means of the water consumption (7) being adapted to detect at least one water consumption value ($Q_c$) in a certain time interval (At) of said user (3), and **in that** it comprises processing means (9) of said standard values ($Q_{Si}$) of water consumption of said activities ($A_i$) and comparing means (11) between said consumption value ($Q_c$) and said standard values ($Q_{Si}$) of water consumption in said time interval (At).

3. Control system (1) according to claim 2, **characterised in that** it comprises first transmitting means (17) adapted to transmit from said user (3) to said processing means (9) at least one list of said activities ($A_i$) performed during said time interval (At), said processing means (9) being adapted to compute and aggregated value ($Q_T$) of predefined and expected water consumption, defined as:

$$Q_T = \sum_{i=1}^{m} n_i \cdot Q_{Si}$$

where $n_i$ is the number of repetitions of said activities ($A_i$) during said interval (At) and m is the number of different activities ($A_i$) of water consumption that can be performed by said user (3), said processing means (9) being further adapted to transmit said aggregated value ($Q_T$) to said comparing means (11).

4. Control system (1) according to claim 2, **characterised in that** it comprises second transmitting means (17) adapted to transmit said water consumption value ($Q_c$) from said detecting means of the water consumption (7) to said comparing means (11).

5. Control system (1) according to any one of the previous claims 2 to 4, **characterised in that** said comparing means (11) are adapted to compare said value ($Q_c$) with said aggregated value ($Q_T$).

6. Control system (1) according to claim 5, **characterised in that** it comprises signalling means (13) adapted to emit and/or send at least one alert signal or message at least if $Q_c > Q_T$.

7. Car-washing plant according to claim 1, **characterised in that** said control system of said consumption of said electric energy comprises means for detecting the consumption of electric energy interposed between said car-washing plant and a supplying network of electric energy, said means for detecting the consumption of electric energy being adapted to detect at least one consumption value ($Q_E$) of electric energy in a certain time interval (At) of said plant.

8. Car-washing plant according to claim 1, **characterised in that** said control system of said consumption of said chemical washing products comprises means for detecting the consumption of chemical products adapted to detect at least one consumption value ($Q_{Pj}$) of a certain and related j-th chemical washing product in a certain time interval (At) of said plant.

9. Car-washing plant according to claim 7 or 8, **characterised in that** said control systems comprise processing means of said standard values ($Q_{Ei}$; $Q_{Pji}$) of said activities ($A_i$) and comparing means between said consumption values ($Q_E$; $Q_{Pj}$) and said related standard values ($Q_{Ei}$; $Q_{Pji}$) in said time interval (At).

10. Car-washing plant according to claim 9, **characterised in that** it comprises first transmitting means adapted to transmit from said plant to said processing means at least one list of said activities ($A_i$) performed during said time interval (At), said processing means being adapted to compute an aggregated predefined and expected consumption value ($Q_{TE}$) and/or ($Q_{TPj}$).

11. Car-washing plant according to claim 7, **characterised in that** it comprises second transmitting means adapted to transmit said consumption value ($Q_E$) and/or ($Q_{TPj}$) of electric energy from said means for detecting the consumption to said comparing means.

12. Car-washing plant according to any one of previous claims 7 to 11, **characterised in that** said comparing means are adapted to compare said value ($Q_E$) with said aggregated value ($Q_{TE}$) and/or said value ($Q_{Pj}$) with said aggregated value ($Q_{TPj}$) for each j-th chemical washing product.

13. Car-washing plant according to claim 12, **characterised in that** it comprises signalling means adapted to emit and/or send at least one alert signal or message at least if $Q_E > Q_{TE}$ and/or at least if $Q_{Pj} > Q_{TPj}$.

14. Process for controlling the water consumption of at least one user (3) supplied by a water supplying network (5), **characterised in that** it comprises the steps of:

a) providing (F101) standard values ($Q_{Si}$) of water consumption related to activities ($A_i$) of water consumption that can be performed by said user (3);
b) detecting (F102) at least one water consumption value ($Q_C$) of said user (3) in a certain time interval (At);
b) computing (F103) an aggregated value ($Q_T$) of predefined and expected water consumption;
d) comparing (F104) said value ($Q_c$) with said aggregated value ($Q_T$) ;
e) if $Q_c > Q_T$ sending (F105) at least one alert signal or message of anomalous operation; and
f) repeating steps b) to e) for a new, following time interval ($\Delta$t).

15. Process according to claim 14, **characterised in that** said aggregated value ($Q_T$) of predefined and expected water consumption is defined as:

$$Q_T = \sum_{i=1}^{m} n_i \cdot Q_{Si}$$

where $n_i$ is the number of repetitions of said activities ($A_i$) during said interval (At) and m is the number of different activities ($A_i$) of water consumption that can be performed by said user (3).

16. Process for controlling the energy consumption of at least one car-washing plant, **characterised in that** it comprises the steps of:

a) providing standard values ($Q_{Ei}$) of consumption of electric energy related to activities ($A_i$) of energy consumption that can be performed by said plant;
b) detecting at least one consumption value ($Q_E$) of electric energy of said plant in a certain time interval (At);
c) computing an aggregated predefined and expected value ($Q_{TE}$) of consumption of electric energy;
d) comparing said value ($Q_E$) with said aggregated value ($Q_{TE}$) ;
e) if $Q_c > Q_T$ sending at least one alert signal or message of anomalous operation; and
f) repeating steps b) to e) for a new following time interval (At).

17. Process for controlling the consumption of chemical washing products of at least one car-washing plant, **characterised in that** it comprises the steps of:

a) providing standard values ($Q_{Pji}$) of consumption for each j-th chemical washing product related to activities ($A_i$) of consumption of chemical products that can be performed by said plant;
b) detecting at least one consumption value ($Q_{Pj}$) of a related j-th chemical washing product of said car-washing plant in said time interval (At);

c) computing for every j-th chemical product an aggregated, predefined and expected value ($Q_{TPj}$) of said j-th chemical product;

d) comparing said value ($Q_{Pj}$) with said aggregated value ($Q_{TPj}$) ;

e) if $Q_{Pj} > Q_{TPj}$ sending at least one alert signal or message of anomalous operation; and

f) repeating steps b) to e) for a new following time interval ($\Delta t$).

FIG. 1

FIG. 2

# EP 2 322 842 A1

Europäisches
Patentamt

European
Patent Office

Office européen
des brevets

## EUROPEAN SEARCH REPORT

Application Number

EP 10 01 4003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/002989 A1 (JONES ALLEN S [NZ]) 10 January 2002 (2002-01-10) * paragraph [0021] - paragraph [0031]; figures * ----- | 1-13,16, 17 | INV. F17D5/02 B60S3/04 |
| X | GB 2 444 080 A (VALIDATION CT [GB]) 28 May 2008 (2008-05-28) | 14,15 | |
| Y | * page 4, line 12 - line 18; figure * ----- | 1-13,16, 17 | |

TECHNICAL FIELDS
SEARCHED      (IPC)

F17D
B60S

The present search report has been drawn up for all claims

| Place of search | Date of completion of the search | Examiner |
|---|---|---|
| The Hague | 16 March 2011 | Christensen, Jakob |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 01 4003

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2011

| Patent document cited in search report | Publication date | Patent family member(s) | Publication date |
|---|---|---|---|
| US 2002002989 A1 | 10-01-2002 | NONE | |
| GB 2444080 A | 28-05-2008 | WO 2008062205 A2 | 29-05-2008 |

EPO FORM P0459

For more details about this annex : see Official Journal of the European Patent Office, No. 12/82